(19) **Europäisches Patentamt / European Patent Office / Office européen des brevets**

(11) **EP 2 817 361 B1**

(12) # FASCICULE DE BREVET EUROPEEN

(45) Date de publication et mention
de la délivrance du brevet:
**02.11.2016 Bulletin 2016/44**

(21) Numéro de dépôt: **13716404.2**

(22) Date de dépôt: **20.02.2013**

(51) Int Cl.:
*H01B 3/42* (2006.01)     *C08J 3/215* (2006.01)
*H01B 3/30* (2006.01)     *C08K 3/36* (2006.01)
*H01B 3/40* (2006.01)

(86) Numéro de dépôt international:
**PCT/IB2013/051371**

(87) Numéro de publication internationale:
**WO 2013/124795 (29.08.2013 Gazette 2013/35)**

(54) **PROCÉDÉ DE SYNTHÈSE IN-SITU DE NANOPARTICULES DE SILICE**

VERFAHREN ZUR IN-SITU SNYTHESE VON SILIKANANOPARTIKELN

PROCESS FOR IN-SITU SYNTHESIS OF SILICA NANOPARTICULES

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **22.02.2012 FR 1251606**

(43) Date de publication de la demande:
**31.12.2014 Bulletin 2015/01**

(73) Titulaire: **Commissariat à l'Énergie Atomique
et aux Énergies Alternatives
75015 Paris (FR)**

(72) Inventeurs:
  • **SCHUBERT, Chloé
    F-73320 Tignes (FR)**
  • **PONCELET, Olivier
    F-38000 Grenoble (FR)**

(74) Mandataire: **Gevers & Orès
41 avenue de Friedland
75008 Paris (FR)**

(56) Documents cités:
**US-A1- 2005 245 665**

• **PHONTHAMACHAI N ET AL: "Solvent-Free
One-Pot Synthesis of high performance
silica/epoxy nanocomposites", POLYMER,
ELSEVIER SCIENCE PUBLISHERS B.V, GB, vol.
51, no. 23, 29 octobre 2010 (2010-10-29), pages
5377-5384, XP027437376, ISSN: 0032-3861
[extrait le 2010-09-27]**

• **NAZIR T ET AL: "Thermally and mechanically
superior hybrid epoxy-silica polymer films via
sol-gel method", PROGRESS IN ORGANIC
COATINGS, ELSEVIER BV, NL, vol. 69, no. 1, 1
septembre 2010 (2010-09-01), pages 100-106,
XP027122759, ISSN: 0300-9440 [extrait le
2010-06-19]**

• **BOGER L ET AL: "Improvement of fatigue life by
incorporation of nanoparticles in glass fibre
reinforced epoxy", COMPOSITES PART A:
APPLIED SCIENCE AND MANUFACTURING,
ELSEVIER SCIENCE PUBLISHERS B.V.,
AMSTERDAM, NL, vol. 41, no. 10, 1 octobre 2010
(2010-10-01), pages 1419-1424, XP027233927,
ISSN: 1359-835X [extrait le 2010-06-16]**

• **LIU P., ZHANG Q., HE L., XIE Q., DING H.: "Thermal
and Mechanical Properties of
Poly(urethane-imide)/Epoxy/Silica hybrids",
JOURNAL OF APPLIED POLYMER SCIENCE, vol.
117, 12 mai 2010 (2010-05-12), pages 3722-3728,
XP002682293,**

• **DATABASE COMPENDEX [Online]
ENGINEERING INFORMATION, INC., NEW YORK,
NY, US; septembre 2007 (2007-09), OCHI M ET AL:
"Effects of water content in in-situ preparation of
epoxy/silica hybrid materials", XP002682294,
Database accession no. E20074310886194 &
KOBUNSHI RONBUNSHU SEPTEMBER 2007
SOCIETY OF POLYMER SCIENCE;
SHINTOMICHO-TOKYU BUILDING JP, vol. 64, no.
9, septembre 2007 (2007-09), pages 568-574, DOI:
DOI:10.1295/KORON.64.568**

EP 2 817 361 B1

- DATABASE WPI Week 200506 Thomson Scientific, London, GB; AN 2005-054806 XP002682295, & KR 2004 0059346 A (KOREA ADV INST SCI & TECHNOLOGY) 5 juillet 2004 (2004-07-05)
- IYER G ET AL: "Dielectric properties of epoxy based nanocomposites for high voltage insulation", IEEE TRANSACTIONS ON DIELECTRICS AND ELECTRICAL INSULATION, IEEE SERVICE CENTER, PISCATAWAY, NJ, US, vol. 18, no. 3, 1 juin 2011 (2011-06-01), pages 659-666, XP011357881, ISSN: 1070-9878, DOI: 10.1109/TDEI.2011.5931050
- HUICHENG SHI ET AL: "Preparation and dielectric properties of epoxy/silica nanocomposites", NANOELECTRONICS CONFERENCE (INEC), 2010 3RD INTERNATIONAL, IEEE, PISCATAWAY, NJ, USA, 3 janvier 2010 (2010-01-03), pages 999-1000, XP031645250, ISBN: 978-1-4244-3543-2
- YANGYANG SUN ET AL: "A Novel Nanocomposite With Photo-Polymerization for Wafer Level Application", IEEE TRANSACTIONS ON COMPONENTS AND PACKAGING TECHNOLOGIES, IEEE SERVICE CENTER, PISCATAWAY, NJ, US, vol. 31, no. 1, 1 mars 2008 (2008-03-01), pages 135-142, XP011346796, ISSN: 1521-3331, DOI: 10.1109/TCAPT.2008.916809
- JIANG K ET AL: "The unique dielectric behaviour of nanosilica epoxy composites", 7TH IEEE CONFERENCE ON NANOTECHNOLOGY, 2007 : IEEE-NANO 2007 ; HONG KONG, CHINA, 2 - 5 AUG. 2007, PISCATAWAY, NJ : IEEE SERVICE CENTER, PISCATAWAY, NJ, USA, 2 août 2007 (2007-08-02), pages 1101-1106, XP031307960, ISBN: 978-1-4244-0607-4
- TOMONORI IIZUKA ET AL: "Effects of nano silica filler size on treeing breakdown lifetime of epoxy nanocomposites", PROPERTIES AND APPLICATIONS OF DIELECTRIC MATERIALS, 2009. ICPADM 2009. IEEE 9TH INTERNATIONAL CONFERENCE ON THE, IEEE, PISCATAWAY, NJ, USA, 19 juillet 2009 (2009-07-19), pages 733-736, XP031529203, ISBN: 978-1-4244-4367-3
- XINGYI HUANG ET AL: "Influence of nanoparticle surface treatment on the electrical properties of cycloaliphatic epoxy nanocomposites", IEEE TRANSACTIONS ON DIELECTRICS AND ELECTRICAL INSULATION, IEEE SERVICE CENTER, PISCATAWAY, NJ, US, vol. 17, no. 2, 1 avril 2010 (2010-04-01), pages 635-643, XP011307624, ISSN: 1070-9878

**Description**

L'invention concerne un procédé de synthèse *in-situ* de nanoparticules de silice dans une matrice polymère thermodurcissable ainsi qu'un procédé de synthèse d'une matrice polymère dopée en nanoparticules de silice durcie.

Les particules de silice, de taille micro- ou macro- ou nano-métrique sont largement utilisées en tant que charges dans des matrices polymères afin d'apporter des propriétés particulières à cette matrice polymère.

Plusieurs approches ont été utilisées jusqu'à présent pour introduire les particules de silice dans une matrice polymère.

La première approche consiste à mélanger la matrice polymère thermodurcissable, avant sa polymérisation ou réticulation ou durcissement avec les particules de silice par mélange mécanique, par exemple à l'aide d'un mélangeur.

Cependant, cette technique ne permet pas d'obtenir une dispersion homogène des particules de silice dans la matrice polymère, ou alors très difficilement.

La deuxième approche a été d'utiliser la synthèse par voie sol-gel.

Une première méthode selon cette approche met en oeuvre un alkoxyde de silicium tel que le tétraéthoxysilane (TEOS) ou le tétraméthoxysilane (TEMOS) dans une solution d'alcool et d'eau. Ce mélange est ensuite chauffé afin d'hydrolyser l'alkoxyde de silicium. On ajoute ensuite un catalyseur, acide ou basique pour condenser la silice sous forme de particules.

Bien que des études aient montré que des composites organique-inorganique, après traitement thermique, peuvent être formés par cette technique, aucune ne révèle la présence de nanoparticules de silice bien définies. De plus, l'immiscibilité des polymères organiques, tels que les résines époxy ou polyesterimide, avec une solution aqueuse et la réactivité accrue des monomères en condition acide ou basique rend difficile la préparation de composite de nanoparticules de silice ou polyesterimide-nanoparticule de silice.

Une seconde méthode a été décrite dans Mascia et al « Sélective Repartition of In-Situ Generated Silicia Produced During the Evolution of an Epoxide Network from a Homogeneous Precursors Mixture and Effects on Properties », Journal of Applied Polymer Science, vol. 94, 1279-1290 (2004). Dans cette méthode, la formation de particules de silice est réalisée *in-situ* dans une résine époxy-bisphénol A. Cette méthode comprend deux étapes : une étape d'obtention d'un agent de couplage téléchelique, suivie d'une étape de fonctionnalisation de la résine avec ledit agent de couplage téléchelique. Cette méthode nécessite en outre l'emploi d'un catalyseur acide et conduit à l'obtention des microparticules de silice-perfluoroéther pendant la réticulation de la résine polymère.

Matejka *et al,* décrit une méthode où l'alkoxyde de silicium est pré-hydrolysé avant d'être introduit dans une matrice époxy-amine. Le mélange obtenu est ensuite réticulé thermiquement afin d'obtenir un polymère hybride époxy-silice. Un réseau interpénétré silice-époxy est ainsi formé. Bien que cette synthèse soit dite être en une seule étape, dans laquelle les composants sont additionnés en même temps, l'hydrolyse de l'alkoxyde se fait d'abord en milieu acide puis un changement de pH est effectué par l'addition en excès de base polymérique. Mais surtout, aucune particule de silice bien définie n'est observée.

Une troisième approche consiste à fabriquer des composites matrice polymère-nanoparticules de silice à partir d'un système de phase bicontinue en fonctionnalisant la matrice polymère, dans un solvant ou sans solvant, et en utilisant un agent de couplage afin de créer une interphase hybride époxy-silice et un réseau de silice. Mais à nouveau, la formation de nanoparticules de silice bien définie n'est pas observée.

Une quatrième approche est décrite par Lee et al, « Nanoqueous Synthesis of Nanosilica in Epoxy Resin Matrix and Thermal Properties of Their Cured Nancomposites », Journal of Polymer Science : Part A : Polymer Chemistry, vol. 44, 755-768 (2006). Cette méthode consiste à effectuer une synthèse de silice en milieu non aqueux en utilisant un sel acide ($BF_3MEA$) comme catalyseur du TEOS. Ce sel permet la formation de nanoparticules de silice dans la résine époxy (DGEBA). Cependant, cette technique génère des ions ce qui est incompatible avec une application dans l'industrie électrique moyenne et haute tension.

Enfin, il a été proposé d'introduire des nanoparticules de silice dans une matrice polymère en utilisant une solution colloïdale de silice. La solution colloïdale de silice est mélangée à la résine par des moyens mécaniques avant polymérisation.

Par exemple, la demande de brevet US 2005/245665 A1 propose d'ajouter les particules de silice en suspension dans le polymère thermodurcissable en présence d'un agent durcisseur. Ainsi, dans les procédés de synthèse d'une matrice polymère dopée en nanoparticules de silice, soit les nanoparticules de silice synthétisées sont mal dispersées dans la matrice polymère, soit le procédé ne permet pas la synthèse de nanoparticules de silice bien définies d'une taille contrôlée. De plus, les procédées de synthèse de l'art antérieur sont des procédés multi-étapes qui utilisent des solvants et des agents de couplage, où encore nécessitent une fonctionnalisation du polymère. Dans tous ces procédés, la synthèse des nanoparticules de silice s'effectue pendant la réticulation du polymère et non avant.

Phonthamachai et al. dans "Solvent-free one-pot synthesis of high performance silica/epoxy nanocomposites", Polymer, Elsevier Science Publishers B.V, GB, vol. 51, no. 23, 29 octobre 2010 (2010-10-29), pages 5377-5384, proposent d'effectuer la synthèse de la silice avant la réticulation du polymère mais une fonctionnalisation des particules de silice est effectuée avec un agent de couplage.

L'invention a pour but de permettre la synthèse de nanoparticules de silice dans une matrice polymère, ces nanoparticules ayant une taille contrôlée, et étant bien dispersées dans la matrice polymère, ce qui permet d'obtenir une transparence du matériau final, tout en gardant une viscosité faible pendant les procédures de mise oeuvre tels que l'imprégnation, l'enrobage et la coulée.

A cet effet, l'invention propose un procédé de synthèse de nanoparticules de silice *in-situ* dans la matrice contenant le précurseur de polymère, avant polymérisation, par voie sol-gel en catalyse basique, sans addition de solvant ou d'agent couplage et sans la fonctionnalisation du précurseur de la matrice polymère.

Ce procédé comprend les étapes suivantes:

a) formation d'une émulsion inverse phase aqueuse-phase organique, dans laquelle la phase aqueuse comprend au moins un catalyseur basique et la phase organique comprend au moins un précurseur de (co)polymère non réticulé choisi parmi un précurseur de résine époxy aliphatique, cycloaliphatique ou aromatique, un précurseur de polyester-imide, un précurseur de (co)polymère polyester insaturé/époxy, un précurseur de (co)polymère polyéther/époxy et un précurseur de polyuréthane ;

b) introduction dans l'émulsion inverse formée à l'étape a) d'au moins un précurseur de silice formant un réseau complet dont la vitesse d'hydrolyse est supérieure à la vitesse de réticulation du (co)polymère, ce précurseur de silice étant choisi parmi le Tétraéthoxysilane (TEOS), le Tétraméthoxysilane (TMOS), le tétrakis(2,2,2-trifluoroéthoxy)silane et le tétrakis (1,1,1,3,3,3-hexafluoropropoxy)silane, et

c) agitation du mélange obtenu à l'étape b) et chauffage à une température comprise entre 20°C et 70°C, et

aucune étape de fonctionnalisation du précurseur de polymère n'est mise en oeuvre et aucun solvant ou agent de couplage n'est ajouté.

De préférence, le catalyseur basique est un catalyseur choisi parmi l'ammoniac et l'urée.

Lorsque le précurseur de (co)polymère est un précurseur de (co)polymère polyéther/époxy ou un précurseur de polyesterimide, les étapes a) et b) sont de préférence mises en oeuvre dans un réacteur à double paroi régulé à une température de 20°C et l'étape c) est mise en oeuvre à 70°C.

Dans le procédé de l'invention, le rapport masse de précurseur de silice/masse de précurseur de (co)polymère est de préférence compris entre 1/100 et 35/100. Il est de préférence de 8/100.

Lorsque le précurseur de (co)polymère non réticulé ne contient pas de durcisseur à l'étape a), le procédé de l'invention comprend de plus une étape d'ajout de durcisseur dans le mélange obtenu après l'étape c).

Dans ce cas, le durcisseur est un durcisseur à base d'anhydride d'acide tel que l'anhydride méthylhexahydrophthalique (MHHPA), l'anhydride méthyltétrahydrophthalique (MTHPA), l'anhydride phtalique (PA), l'anhydride tétrahydrophthalique (THPA), et l'anhydride hexahydrophthalique (HHPA).

L'invention propose également un procédé de synthèse d'une matrice polymère, dopée en nanoparticules de silice, thermodurcie, qui comprend les étapes suivantes :

a1) mise en oeuvre du procédé de synthèse *in-situ* de nanoparticules de silice dans une matrice polymère thermodurcissable selon l'invention,

b1) chauffage de la matrice polymère thermodurcissable dopée en nanoparticules de silice obtenu à l'étape a1) à la température de durcissement de la matrice polymère.

L'invention sera mieux comprise et d'autres caractéristiques et avantages de celle-ci apparaîtront plus clairement à la lecture de la description explicative qui suit et qui est faite en référence aux figures dans lesquelles :

- la figure 1 montre des images prises au microscope électronique à transmission (MET) sur lesquelles on peut observer la morphologie, la taille et la distribution des nanoparticules de silice synthétisées selon le protocole I de l'exemple 1 (grossissement x100K) ;
- la figure 2 montre des images prises au microscope électronique à transmission (MET) sur lesquelles on peut observer la morphologie, la taille et la distribution des nanoparticules de silice synthétisées selon le protocole II de l'exemple 1 (grossissement x200K) ;
- la figure 3 montre des images prises par un microscope électronique à transmission (MET) sur lesquelles on peut observer la morphologie, la taille et la distribution des nanoparticules de silice synthétisées selon le protocole III de l'exemple 2 (grossissement x50K et x100K) ;
- la figure 4 montre l'évolution du courant TSM de l'échantillon 17 obtenu par le protocole I de l'exemple 1 mesuré à 10kV, 25°C pendant 2h) ;
- la figure 5 est un diagramme qui présentant les maximums de courants d'onde thermique TSM à 10kV à 60°C pendant 2 heures, mesurés sur les échantillons 16, 17 et 18 ;

- la figure 6 est un diagramme qui présente les maximums de courants d'onde thermique TSM à 10kV à 60°C pendant 2 heures, mesurés une seconde fois sur les échantillons 16, 17 et 18 ;
- la figure 7 montre les thermographes de calorimétrie différentielle à balayage (DCS) des échantillons obtenus à partir de la matrice polymère dopée en nanoparticules de silice synthétisées selon le protocole III de l'exemple 2 ;
- la figure 8 montre les résultats de l'analyse thermogravimétrique de la stabilité thermique des matrices polymères dopées en nanoparticules de silice synthétisées par les protocoles I et III de l'invention, après une dégradation thermique de ces matrices polymères sous azote et oxygène ;
- la figure 9 montre les résultats de l'analyse thermogravimétrique de la stabilité thermique des matrices polymères dopées en nanoparticules de silice synthétisées par le protocole I de l'invention, après une dégradation thermique de ces matrices polymères sous azote uniquement ;
- la figure 10 montre les résultats de l'analyse thermogravimétrique de la stabilité thermique des matrices polymères dopées en nanoparticules de silice synthétisées par le protocole III de l'invention, après une dégradation thermique de ces matrices polymères sous azote uniquement.

Dans le présent texte, les termes « matrice thermodurcissable » sont utilisés pour désigner les polymères ou (co)polymères, qui, après traitement thermique (chaleur radiation) ou physico-chimique (catalyse, durcisseur), polymérisent en formant un réseau tridimensionnel durcis et formeront le polymère ou (co)polymère durci de manière irréversible.

Les termes « précurseur de (co)polymère » désignent des monomères et/ou des oligomères et/ou des pré-polymères menant à la formation du (co)polymère.

Les termes « matrice thermodurcie » désignent le polymère ou (co)polymère durci par traitement thermique ou physico-chimique.

Le terme « durci », est utilisé pour désigner l'état de la matrice polymère après l'étape de réticulation du polymère par traitement thermique ou physico-chimique.

Les termes « matrice (co)polymère » désignent une matrice dans laquelle les précurseurs de (co)polymères (monomères et/ou oligomères et/ou pré-polymères) forment un (co)polymère.

Les termes « réticulé », « réticulisable » désignent un agencement, ou une aptitude à former, respectivement, en réseau (chaines de polymères reliées par des liaisons chimiques) des (co)polymères durs de la matrice polymère durcie ou durcissable.

Les termes « résine » et « (co)polymère » sont employés d'une façon interchangeable.

Le terme « nanoparticule(s) » désigne des particules dont la taille est comprise entre 1 et 1 000 nanomètres, préférentiellement inférieure à 100 nm.

Au sens de l'invention, les termes « un précurseur de silice formant un réseau complet » désignent un réseau tridimensionnel de silice formant des objets discrets, chimiquement stable. Il n'y a pas d'interpénétration entre le réseau formé par la matrice polymère et celui formé par le précurseur de silice.

Les termes « agent de couplage » et « agent compatibilisant » désignent un composé chimique assurant une meilleure miscibilité et une meilleure dispersion du précurseur de silice et du précurseur de (co)polymère, créant des nanodomaines de silice. Par leur nature chimique (molécules au moins bifonctionnelles), les agents de couplages réalisent la cohésion entre les composés inorganiques et la matrice organique en créant la liaison chimique entre le précurseur de (co)polymère et le précurseur de silice. Les principaux agents de couplage sont de type glycidoxysilanes comme le ((3-glycidoxypropyl)triméthoxysilane), les mercaptosilanes tels que le 3-mercaptopropyltriméthoxysilane, le 3-mercaptopropylméthyldiméthoxysilanc, le 3-mercaptopropyltriethoxysilane), les aminosilanes tels que le ((n-phénylamino)méthyltriméthoxysilane, et le (n-phénylamino)méthyltriethoxysilane).

Les termes « fonctionnalisation du précurseur de (co)polymère » désignent une étape pendant laquelle le précurseur de polymère est modifié par une ou plusieurs fonctions chimiques, ces fonctions chimiques ayant pour rôle de favoriser la liaison chimique, physique ou autre entre le (co)polymère et le précurseur de silice, comme cela est fait dans Mascia *et al.* cité ci-dessus.

Le terme « solvant » désigne un liquide permettant la dissolution ou la dilution du précurseur de silice dans la matrice polymère.

Dans l'invention, l'abbréviation TSM, en anglais "Thermal Step Method", signifie méthode de l'onde thermique.

La méthode de l'onde thermique est une méthode non destructive qui consiste à mesurer le TSC ("thermal simulated current" en anglais) (courant thermique simulé) afin de déterminer les charges d'espaces du matériau. Les charges d'espace sont l'ensemble des charges réelles, positives et négatives, contenu dans l'isolant qui produisent un champ résiduel entrainant une augmentation local du champ électrique lorsque le matériau est soumis à une polarisation. Cette augmentation locale du champ électrique crée des zones de faiblesse dans le matériau qui finissent par dégrader les propriétés isolantes du matériau.

Afin de déterminer les charges d'espace d'un isolant, une tension est appliquée sur l'échantillon (polarisation) à une température définie pendant un temps définie. Le courant (TSC), $I(t)$, qui est fonction du champ électrique $E(x)$ correspondant aux charges d'espace, est ensuite mesuré.

$$I(t) = -\alpha \oint_{0}^{D} E(x) \frac{\partial \Delta T(x,t)}{\partial} dx$$

Donc plus le courant mesuré a une valeur élevée, plus le matériau accumule des charges d'espace et il sera donc moins résistant aux contraintes électriques (Polymer International 46 (1998) 81-92. Thèse C.D Pham (2009).

Le procédé de synthèse *in-situ* de nanoparticules de silice dans une matrice polymère thermodurcissable selon l'invention permet la synthèse d'une matrice polymère thermodurcissable dopée en nanoparticules de silice dans laquelle les nanoparticules de silice sont formées dans la matrice polymère non polymérisée et non réticulée et même sans ajout de solvant ou agent de couplage et sans qu'aucune fonctionnalisation du précurseur de (co)polymère ou du (co)polymère lui-même ne soit mise en oeuvre.

Il s'agit donc d'un procédé très simple à mettre en oeuvre car ne nécessitant pas d'étape de fonctionnalisation du (co)polymère ou de son précurseur, ni d'ajout des solvants ou des agents de couplages. Ce procédé permet d'obtenir des nanoparticules de silice bien dispersées dans la matrice polymère et de taille contrôlée.

De préférence, le précurseur de (co)polymère est un précurseur de résine époxyde aliphatique, cycloaliphatique ou aromatique tel que l'Araldite®, le D.E.R®, un précurseur de polyester-imide tel que le Voltatex®, le Damisol®, un précurseur de (co)polymère polyester insaturé/époxy, un précurseur de (co)polymère polyéther/époxy, un précurseur de (co)polymère polyuréthane.

Ce précurseur constitue la phase organique de l'émulsion inverse phase aqueuse-phase organique qui doit être formée pour mettre en oeuvre le procédé de l'invention.

Dans le procédé de l'invention, la phase aqueuse comprend au moins un catalyseur basique.

Une fois l'émulsion inverse formée, un précurseur de silice formant un réseau complet et dont la vitesse d'hydrolyse est supérieure à la vitesse de réticulation du (co)polymère (au moins 50 fois supérieure) est introduit dans cette émulsion inverse.

Un précurseur de silice formant un réseau complet approprié pour mettre en oeuvre le procédé de synthèse *in-situ* de nanoparticules de silice dans une matrice polymérisable selon l'invention est le tétraéthoxysilane, le tétraméthoxysilane, ou le tetrakis(2,2,2-trifluoroéthoxy)silane et le tetrakis (1,1,1,3,3,3-hexafluoropropoxy)silane.

Bien entendu, tout autre précurseur de silice formant un réseau complet et dont la vitesse d'hydrolyse est supérieure à la vitesse de réticulation du (co)polymère qui apparaîtra à l'homme de l'art pourra être utilisé.

Quant au catalyseur basique, il peut être tout catalyseur basique qui apparaîtra à l'homme de l'art tel qu'une base d'ammonium organique volatile permettant une faible hydrolyse et une rapide condensation du précurseur de silice, ne générant aucun ion pouvant altérer les propriétés isolantes de la matrice. De préférence, on utilisera l'ammoniac ou l'urée.

De préférence, le rapport masse précurseur de silice/masse de précurseur de (co)polymère est compris entre 1/100 et 35/100. De manière plus préférable, ce pourcentage est de 8/100.

Le mélange émulsion inverse - particules de silice est d'abord agité et puis chauffé à une température T°C comprise entre 20°C et 70°C pour former le (co)polymère voulu et les nanoparticules de silice.

Lorsque le précurseur de (co)polymère est un précurseur de (co)polymère polyether/époxy ou un précurseur de polyester imide, les étapes de formation d'une émulsion inverse et d'ajout du précurseur de silice sont effectuées dans un réacteur à double paroi régulé à une température de 20°C et l'étape d'agitation du mélange obtenu et de son chauffage est effectuée à 70°C.

La matrice polymère thermodurcissable dopée en nanoparticules de silice obtenue par le procédé de formation *in-situ* de nanoparticules de silice dans une matrice polymère thermodurcissable est décrite. Dans cette matrice polymère thermodurcissable, les nanoparticules de silice ont un diamètre mesuré par MET compris entre 20 et 80 nanomètres, bornes incluses. Cette matrice pourra être stockée ou transportée sur son site d'utilisation, avant sa mise en forme pour obtenir un article thermodurci.

Cette matrice polymère thermodurcissable dopée en nanoparticules de silice peut être utilisée pour la fabrication d'un matériau diélectrique moyenne et haute tension.

Pour obtenir une matrice polymère dopée en nanoparticules de silice thermodurcies, la matrice thermodurcissable dopée en nanoparticules de silice est chauffée à la température de durcissement de cette matrice polymère thermodurcissable. Une étape de mise à la forme voulue de la matrice polymère thermodurcissable peut être réalisée.

Le précurseur de (co)polymère non réticulé peut déjà contenir un durcisseur. Dans ce cas, pour obtenir la matrice polymérique thermodurcie, la matrice polymère dopée en nanoparticules de silice durcies, il suffira de chauffer la matrice polymérisable dopée en nanoparticules de silice selon l'invention à sa température de polymérisation-durcissement.

Lorsque le précurseur de (co)polymère ne contient pas de durcisseur alors le procédé de synthèse *in-situ* de nanoparticules de silice poreuse dans une matrice polymère thermodurcissable selon l'invention comprend une étape d'ajout de durcisseur dans le mélange obtenu après l'étape d'agitation du mélange émulsion inverse-précurseur de silice et chauffage.

La matrice polymère thermodurcie dopée en nanoparticules de silice obtenue par le procédé de l'invention peut être utilisée en tant que matériau diélectrique moyenne et haute tension.

Tout matériau diélectrique comprenant une matrice polymère dopée en nanoparticules de silice obtenue par les procédés de l'invention est également décrit.

Afin de mieux faire comprendre l'invention, on va maintenant en décrire à titre d'exemple purement illustratif et non limitatif plusieurs modes de mise en oeuvre.

## EXEMPLES

### Exemple 1

***Synthèse de** nanoparticules **dans** une **résine polyester/époxy (résine Harzkomb EPE19A®).***

Le but des expériences décrites dans cet exemple est la synthèse *in-situ* des nanoparticules de silice ayant de tailles différentes. Pour parvenir à ce but, les nanoparticules de silice ont été synthétisées par voie sol-gel selon le principe de Stöber. Cette méthode est basée sur l'hydrolyse suivie par la condensation du TEOS (tétraéthoxysilane, densité d = 0.934 g/cm$^3$ (donnée fournisseur), M = 208.33 gmol$^{-1}$, Sigma Aldrich). Ces réactions ont lieu en solution aqueuse d'ammoniac et de précurseur de polymère organique Harzkomb EPE19A (précurseur de résine polyester/époxy à base de bisphénol A-épichlorohydrine, commercialisé par *Walter Mäder AG)* où l'ammoniac sert de catalyseur pour les réactions d'hydrolyse et de condensation du TEOS.

Pour obtenir des nanoparticules de tailles différentes, il suffit de faire varier les conditions réactionnelles, telles que le volume des réactants, le temps de réaction et la température.

Ces deux expériences conduisent à l'obtention respectivement des nanoparticules de silice ayant une taille de 50 nm (protocole I) et de 20 nm (protocole II).

1. Protocole de synthèse de nanoparticules d'une taille de l'ordre de 50 nm (Protocole I)

Pour obtenir des particules de 50 nm, les composés suivants ont été additionnés dans des proportions adéquates d'eau, de solution d'ammoniac, de résine EPE19A et de TEOS. La procédure consiste à ajouter, dans l'ordre, dans un réacteur double paroi régulé en température à 25°C, en volume : 4,86 mL (6,2 phr (parties pour 100 parties de résine) d'eau, 0,1361 mL (0,2 phr) de la solution d'ammoniaque et 70 mL (100 phr) de la solution EPE19A. L'ordre d'ajout est important pour l'homogénéisation du pH et la stabilité de l'émulsion. La solution est alors agitée (moteur IKA RW20n, agitateur type hélices 4 pales) pendant 10 min. Après stabilisation du mélange réactionnel, 6,80 mL (8,06 phr) de TEOS est introduit. La solution obtenue est alors agitée pendant trois heures à 20°C et est ensuite chauffée à 70°C pendant 30min.

2. Protocole de synthèse de nanoparticules d'une taille de l'ordre de 20 nm (Protocole II)

Pour obtenir des particules de 20 nm, le protocole I est modifié en changeant les conditions expérimentales telles que la température et le volume de réaction. Pour un volume de résine de 5 L : la procédure consiste alors à ajouter, dans l'ordre, dans un réacteur double paroi régulé en température à 25 °C, 540 mL (9,6 phr (parties pour 100 parties de résine) d'eau et 9,72 mL (0,2 phr) de la solution d'ammoniaque. Après 20 minutes d'agitation mécanique (moteur Heidolph RZR2040 et agitateur type ancre) 5000 mL (100 phr) de la solution Harzkomb EPE19A est introduite. La solution est alors agitée pendant 2h. Après stabilisation du mélange réactionnel, 558,2 mL (9,3 phr) de TEOS est introduit. La solution obtenue est alors agitée pendant 20 heures à 25°C et est ensuite chauffée à 70°C pendant 3h.

Ainsi, lorsqu'on augmente la proportion d'eau et/ou celle de l'ammoniac, le diamètre moyen des particules augmente. En effet, la vitesse d'hydrolyse est accélérée ce qui conduit à une augmentation du nombre de monomères de silice par goutte d'eau.

### Exemple 2

***Synthèse de nanoparticules dans une résine polyester/imide. (résine Damisol® 3309 Von Roll, Protocole III),***

L'exemple 2 concerne la synthèse de nanoparticules de silice, ayant une taille de 80 nm, dans un précurseur de résine polyesterimide qui contient un durcisseur. Le catalyseur et le précurseur de silice sont les mêmes que ceux utilisés dans l'exemple 1.

Pour obtenir des particules de 80 nm, la procédure consiste alors à ajouter, dans l'ordre, dans un réacteur double paroi régulé en température à 25 °C, en volume, 54 mL (10,3 phr) d'eau, 0,97 mL (0,2 phr) de la solution d'ammoniaque et 500 mL (100 phr) de la solution Damisol 3309. La solution est alors agitée (moteur IKA RW20n, agitateur type hélices 4 pales) pendant 10 min. Après stabilisation du mélange réactionnel, 48,56 mL (8,6 phr) de TEOS est introduit. La solution obtenue est alors agitée pendant trois heures à 25°C et est ensuite chauffée à 70°C pendant 30min à 1h30.

**Exemple 3**

L'exemple 3 décrit la production d'échantillons solides (durcis) à partir des mélanges réactionnels obtenus par les protocoles des exemples 1 et 2.

Cette production d'échantillons solides peut s'effectuer selon deux systèmes :

*1. Système bi-composants :*

Celui-ci consiste à l'utilisation d'une résine bi-composant comprenant la résine de base d'une part et l'agent réticulant et/ou catalyseur d'autre part. La formation du réseau en trois dimensions et le durcissement de la résine a lieu après le mélange des deux composants. Cette réaction est accélérée par la chaleur.

Dans le cas de l'invention, à l'exemple 1, la solution Harzkomb EPE19A dopée (protocole I et II) correspond au premier composant qui va réagir en présence de la solution Harzkomb EPE19B (durcisseur à base d'anhydride acide).

Pour l'élaboration de la référence, nommée ensuite EPE19, conformément aux données du fabricant 2/3 d'EPE19A est mélangé à 1/3 d'EPE19B. La solution obtenue est ensuite coulée dans un moule de 1 mm d'épaisseur préchauffé à 100°C. Le moule rempli est ensuite placé dans un four à 100°C pendant 18h et à 140°C pendant 4h.

*2. Système mono-composant :*

Celui-ci consiste à utiliser une résine formulée, c'est-à-dire que le durcisseur et la résine sont dans le même batch. La réticulation est alors amorcée par la chaleur.

Les mélanges obtenus selon le protocole III sont à base de Damisol 3309, formulation complète comportant un durcisseur, fourni par Von Roll. Le procédé de mise en oeuvre pour obtenir des plaques de 1 mm d'épaisseur consiste à couler les résines dopées selon le protocole III dans un moule préchauffé à 100°C et placé au four pour réticulation.

**I. Caractérisation des polymères dopés en nanoparticules de silice obtenus selon les procédés de l'invention.**

1. Caractérisation des matrices polymères dopés en nanoparticules de silice non réticulés

Les différentes matrices dopées obtenues aux exemples 1 et 2 ci-dessus ont été caractérisées avant réticulation (durcissement) par analyse de la viscosité et de la morphologie des nanoparticules de silice.

1.1 Caractérisation morphologique

Afin de pouvoir caractériser les nanoparticules de silice, les matrices dopées ont été dissoutes dans un solvant. Le solvant utilisé ici est l'acétone. Les nanoparticules de silice ont été récupérées par sédimentation en centrifugeant les solutions de matrices dissoutes.

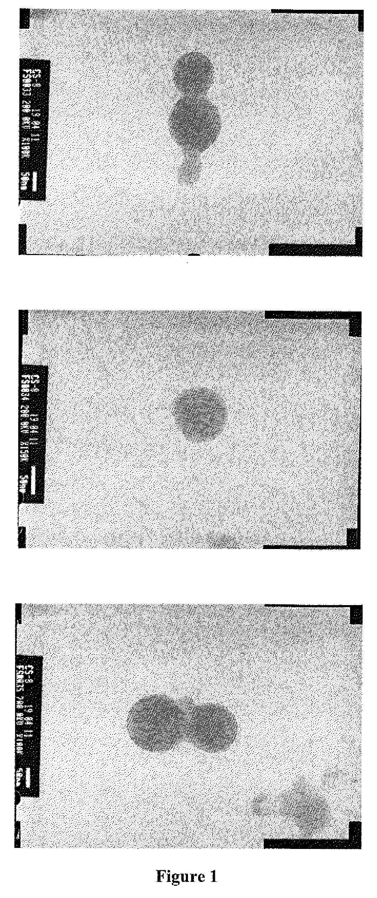

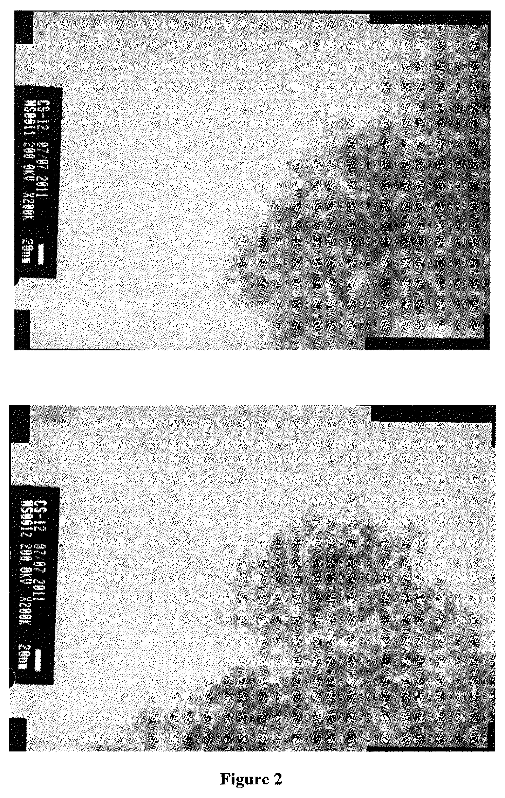

Les images obtenues par microscopie électronique à transmission (MET *JEOL 2000FX)* permettent de déterminer la morphologie, la taille et la distribution des nanoparticules montrent deux tailles (respectivement de 50 nm et de 20 nm) de nanoparticules sphériques de silices correspondant aux deux protocoles I et II de synthèse de nanoparticules de silice dans la résine polyester/époxy Harzkomb EPE19A (figures 1 et 2).

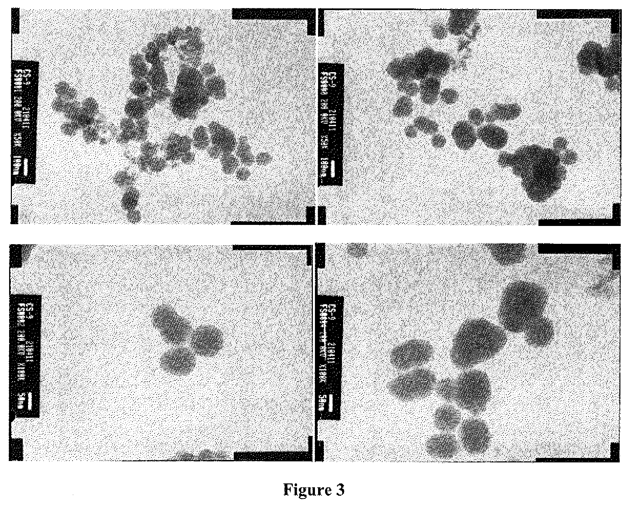

De même, les images MET des échantillons provenant des synthèses suivant le protocole III confirment la présence de nanoparticules sphériques ayant un diamètre de 80nm (figure 3).

1.2 Caractérisation de la viscosité

La viscosité est un paramètre important pour la mise en oeuvre des résines dans l'industrie à moyenne et haute tension car le procédé VPI (Imprégnation sous Vide et Pression), qui est le procédé le plus répandu pour l'imprégnation de moteurs et générateurs haute tension ainsi que de moteurs de traction, requière une viscosité inférieure à 300 cP à température ambiante. Que ce soit pour des imprégnations globales ou barres à barres, ce procédé consiste à :

1) placer l'objet préchauffé dans une cuve sous vide. Etablir le vide,

2) transférer la résine sous vide, fermer le robinet de la pompe à vide. Respecter le temps d'imprégnation, ici 6 heures,

3) casser le vide. Libérer la pression, et

4) transférer la résine dans une cuve de réserve. Mettre l'objet dans le four et polymériser.

Cependant, la viscosité de la résine a tendance à augmenter considérablement lors de l'ajout d'une charge telle que la silice et surtout lors de l'ajout de nanoparticules. En effet, pour une même masse de silice introduite sous forme nanométrique dans une matrice polymère, l'augmentation de la surface spécifique du polymère est considérable par rapport à celle de microparticules ce qui entraine une élévation de la viscosité.

Les mesures de viscosités ont été effectuées à 23 °C avec le viscosimètre *Brookfield*© *DV-II+Pro*. Les viscosités dynamiques des résines sont regroupées dans le tableau 1 ci-dessous :

**Tableau 1: Récapitulatif des viscosités des résines dopées.**

| Synthèses selon le protocole | Viscosité (cP) à 23°C |
| --- | --- |
| Protocole I | 144.9 |
| Protocole II | 80 |
| *Résine EPE19A* | *90* |
| Protocole III | 212 |
| *Résine Damisol3309* | *150* |

Les résultats ci-dessus montrent que l'influence des nanoparticules sur la viscosité est minimisée par les procédés de l'invention. La synthèse et la croissance des nanoparticules poreuses dans la matrice créent une forte intimité entre les particules et la matrice. Les nanoparticules sont en suspension stable et n'ont pas d'influence sur le comportement rhéologique de la résine.

2. Caractérisation des matrices dopées en nanoparticules de silice réticulées (durcies)

2.1 Caractérisations électriques :

Les caractérisations électriques ont été effectuées par mesure des charges d'espace à l'aide de la méthode de l'onde thermique entre chaque conditionnement électrique.

L'analyse de l'onde thermique a été effectuée après quatre traitements différents :

• Échantillons vierges non soumis à une tension
• Echantillons soumis à 5kV à 25°c pendant 2 h
• Echantillons soumis à 10 kV à 25°c pendant 2 h
• Echantillons soumis à 10 kV à 60°c pendant 2 h

Ces traitements ont pour but de faire ressortir distinctement l'effet de la tension et de la température sur la charge d'espace qui est caractéristique de la présence d'impuretés et de défauts dans l'isolant, et qui créent, localement, des contraintes électriques, mécaniques et voire même chimiques.

Les caractéristiques des échantillons obtenus selon le protocole I de l'invention sont présentées dans le tableau 2.

Tableau 2

| Formulations | Nom de l'expérience | % de silice | Taille des particules (nm) | Chauffage | Permittivité relative $\varepsilon r$ |
| --- | --- | --- | --- | --- | --- |
| Protocole I | 17 | 6.2 | 50 | 18h à 100°C+ 4h à 140°C | 7.27 |
| | 16 | 5.3 | | 18h à 100°C+ 4h à 140°C | 4.72 |
| | 18 | 8.7 | | 65h à 100°C+ 4h à 140°C | 2.73 |

Les mesures de l'onde thermique sur les échantillons vierge (avant traitement électrique), a permis de vérifier que les échantillons ne présentaient pas de charges d'espace significatives liées à leur fabrication.

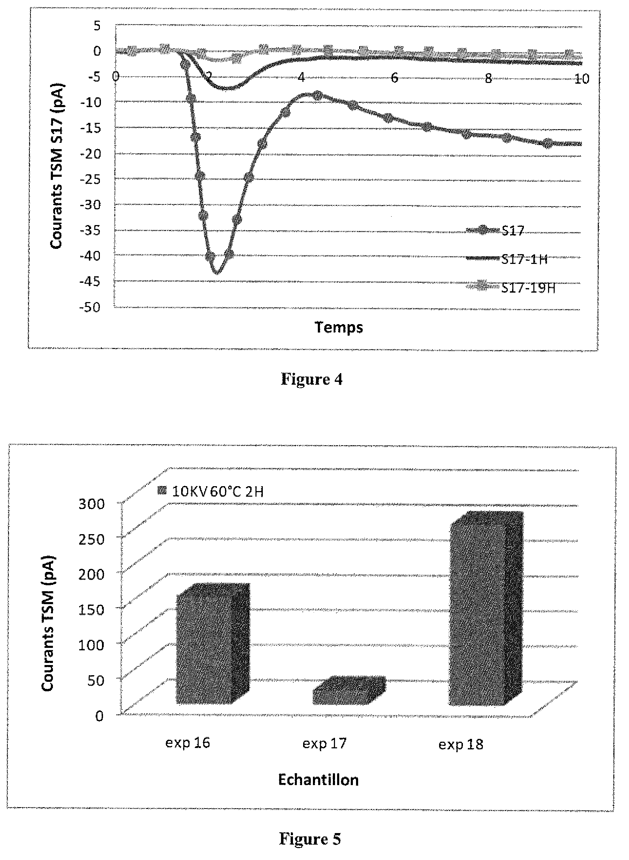

Les deux traitements suivants (5kV et 10 kV à 25°C pendant 2 h) ont montré que les échantillons 17 et 18 avaient tendance à écouler la charge d'espace. En effet, trois caractérisations ont été effectuées à 30 minutes, à 1 heure et à 19 heures après traitement électrique des échantillons. Les résultats observés sur la figure 4 montrent qu'entre ces caractérisations, les amplitudes des courants d'onde thermique ont diminué significativement. Ainsi, ces échantillons écoulent les charges piégées lors du traitement. Seul l'échantillon 16 garde une quantité de charge d'espace quasi-constante même après 19 heures de mise en court circuit. L'écoulement des charges lors du traitement traduit une évolution des propriétés du matériau lors du test qui peut être associée soit à la polymérisation incomplète de l'échantillon, soit des phénomènes de mouvement des chaines, de particules sous champ électrique. Cependant, la tendance à écouler la charge d'espace, permet d'éviter l'accumulation de charges d'espace et donc de diminuer les zones de contraintes électriques ce qui est favorable pour un isolant électrique.

Pour évaluer l'effet de la température sur les échantillons, un traitement à 10kV à 60°C a été effectué pendant 2 heures.

Le diagramme montré en figure 5 donne les maximums des courants d'onde thermique pour les deux traitements à 10kV sous 60°C pendant 2 heures qui ont été réalisés sur le même échantillon.

Les données de la figure montrent que l'échantillon 17 est celui qui accumule le moins la charge d'espace, contrairement à l'échantillon 18 qui apparaît avoir davantage été affecté par la contrainte thermoélectrique. Ainsi, l'échantillon 17 résiste mieux aux contraintes thermoélectriques que l'échantillon 18, qui reste néanmoins un bon isolant.

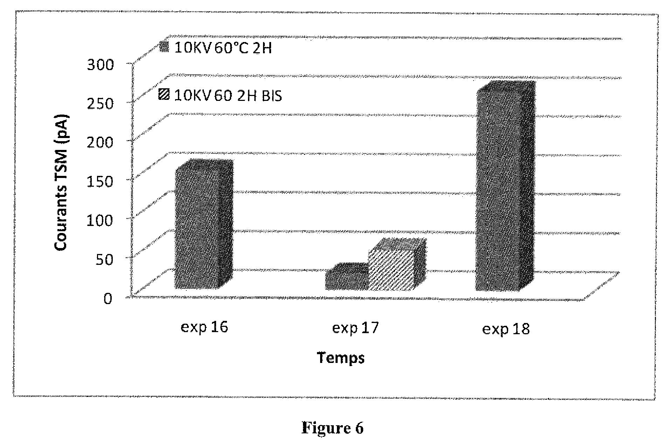

Pour confirmer les résultats surprenants obtenus pour l'échantillon 17, un nouveau traitement de 10kV, 60°C pendant 2h lui a été appliqué. Comme présenté sur la figure 6, malgré l'ajout de ce traitement électrique, cet échantillon reste largement celui qui accumule le moins de charges d'espace. Ainsi, ce traitement permet d'obtenir un matériau accumulant moins la charge d'espace, c'est à dire résistant mieux aux contraintes électriques. Le matériau synthétisé selon le procédé de l'invention voit donc ses propriétés isolantes améliorées.

2.1 Caractérisation thermique :

L'introduction de nanoparticules de silice dans les matrices polymères selon l'invention ne dégrade pas les propriétés thermiques de celles-ci, comme le montrent les valeurs de transition vitreuse et diffusivité thermique des échantillons obtenus à partir des matrices polymères dopées en nanoparticules obtenus selon les procédés de l'invention (Tableau 3)

**Tableau 3: Transitions vitreuses et diffusivités thermiques des plaques effectuées d'après les protocoles de synthèse I et III**

| Formulations | Tg | Diffusivité thermique ($m^2/s$) |
|---|---|---|
| Protocole I | 63 | 0.08 |
| *Résine EPE19 (donnée fournisseur)* | *90* | *0.08* |
| Protocole III | 65 | 0.105 |
| *Résine Damisol 3309* | *66* | *0.10* |

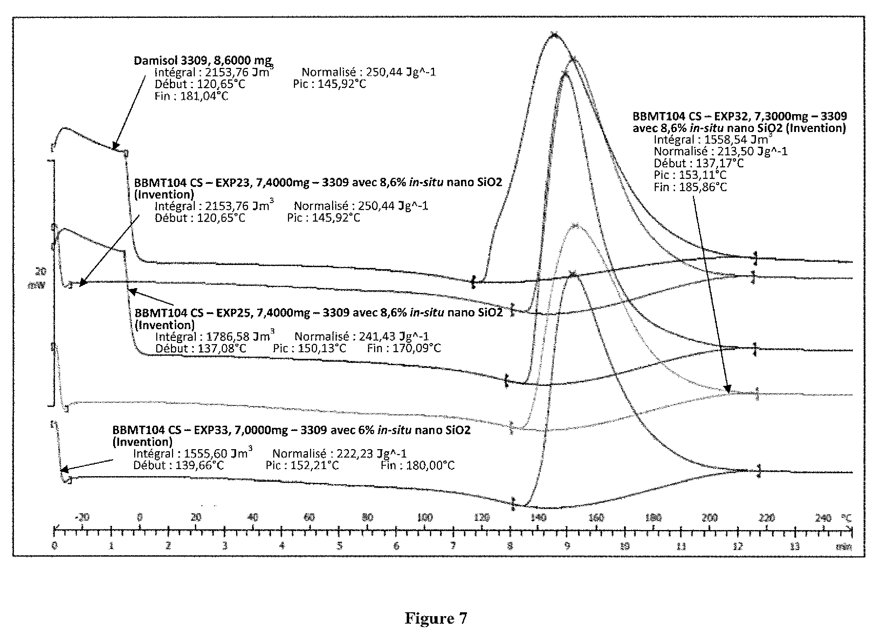

De plus, le comportement exothermique dû à la formation du réseau tridimensionnel, dans les matrices polymères dopées de l'invention, reste comparable à celui du polymère de base, comme le confirment les thermographes de la Figure 7. En effet, les températures de cuisson sont déterminées par rapport aux pics exothermiques qui ici sont tous équivalents.

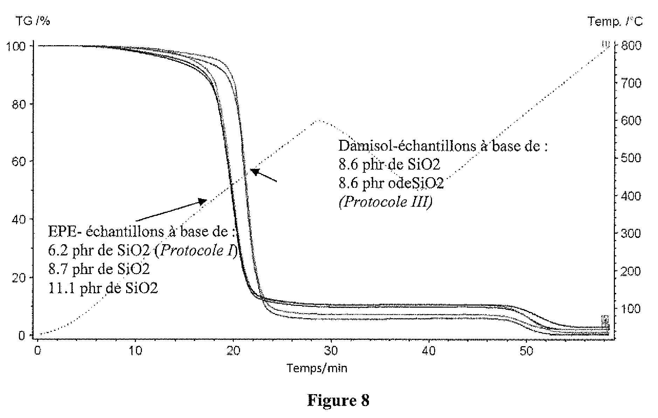

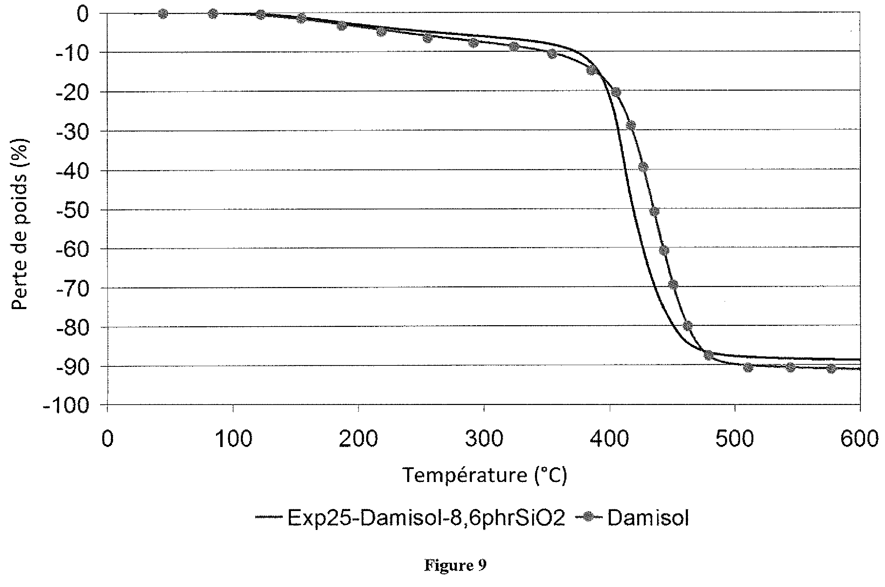

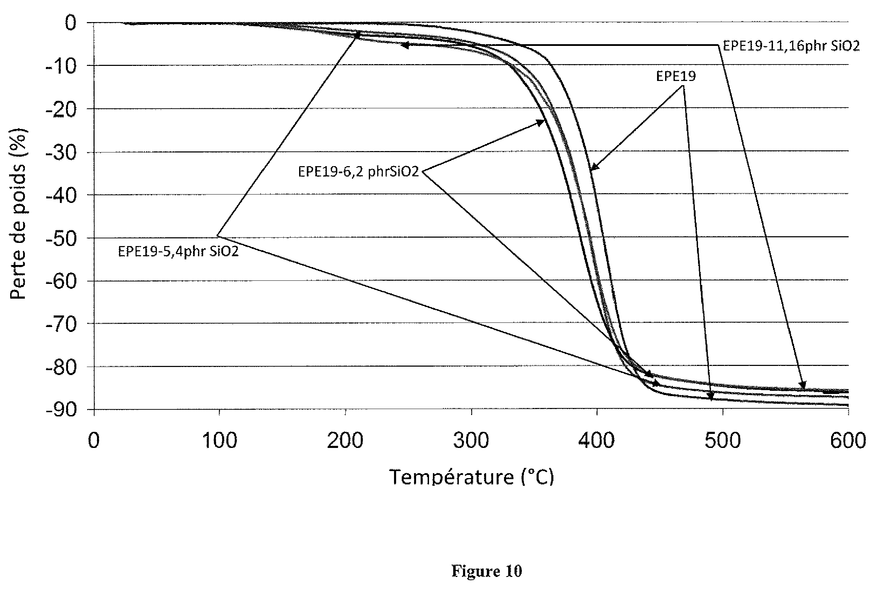

La stabilité thermique des matrices polymère dopées en nanoparticules de silice synthétisées selon les protocoles I et III est mesurée par analyse thermogravimétrique (ATG) après une dégradation thermique sous azote et oxygène (Figure 8) et sous azote seulement (Figures 9 et 10) de matériaux comprenant ces matrices polymères.

La dégradation thermique des matrices polymères dopées en nanoparticules de silice synthétisées selon les protocoles I et III, ne montre que peu de changement par rapport à celle de la matrice polymère de base. Le dopage par des nanoparticules de silice n'altère donc pas la structure tridimensionnelle du réseau ce qui se traduit par une stabilité thermique identique entre résine de base et résines dopées.

## Revendications

**1.** Procédé de synthèse *in-situ* de nanoparticules de silice dans une matrice polymère thermodurcissable,

**caractérisé en ce qu'**il comprend les étapes suivantes:

a) formation d'une émulsion inverse phase aqueuse-phase organique, dans laquelle la phase aqueuse comprend au moins un catalyseur basique et la phase organique comprend au moins un précurseur de (co)polymère non réticulé choisi parmi un précurseur de résine époxy aliphatique, cycloaliphatique ou aromatique, un précurseur de polyester-imide, un précurseur de (co)polymère polyester insaturé/époxy, un précurseur de (co)polymère polyéther/époxy et un précurseur de polyuréthane ;

b) introduction dans l'émulsion inverse formée à l'étape a) d'au moins un précurseur de silice formant un réseau complet dont la vitesse d'hydrolyse est supérieure à la vitesse de réticulation du (co)polymère, ce précurseur de silice étant choisi parmi le Tétraéthoxysilane (TEOS), le Tétraméthoxysilane (TMOS), le tétrakis(2,2,2-trifluoroéthoxy)silane et le tétrakis (1,1,1,3,3,3-hexafluoropropoxy)silane, et

c) agitation du mélange obtenu à l'étape b) et chauffage à une température comprise entre 20°C et 70°C, et

**en ce qu'**aucune étape de fonctionnalisation du précurseur de polymère n'est mise en oeuvre et aucun solvant ou agent de couplage n'est ajouté.

2. Procédé selon la revendication 1, dans lequel le catalyseur basique est choisi parmi l'ammoniac ou l'urée.

3. Procédé selon la revendication 1 ou 2, **caractérisé en ce que** le précurseur est un précurseur de (co)polymère polyéther/époxy ou un précurseur de polymère polyesterimide et **en ce que** les étapes a) et b) sont mise en oeuvre dans un réacteur à double paroi régulé en température à 20°C et l'étape c) est effectuée à 70°C.

4. Procédé selon l'une quelconque des revendications précédentes, dans lequel le rapport masse de précurseur de silice/masse de précurseur de (co)polymère est compris entre 1/100 et 35/100, de préférence est de 9/100.

5. Procédé selon l'une quelconque des revendications précédentes, **caractérisé en ce qu'**à l'étape a) le précurseur de (co)polymère non réticulé ne contient pas de durcisseur et **en ce qu'**il comprend une étape d'ajout du durcisseur dans le mélange obtenu après l'étape c).

6. Procédé selon la revendication 5, dans lequel le durcisseur est un durcisseur à base d'anhydride d'acide tel que l'anhydride méthylhexahydrophthalique (MHHPA), l'anhydride méthyltétrahydrophthalique (MTHPA), l'anhydride phtalique (PA), l'anhydride tétrahydrophthalique (THPA), et l'anhydride hexahydrophthalique (HHPA).

7. Procédé de synthèse d'une matrice polymère thermodurcie dopée en nanoparticules de silice comprenant les étapes suivantes :

a1) mise en oeuvre du procédé selon l'une quelconque des revendications 1 à 5,

b1) chauffage de la matrice thermodurcissable dopé en nanoparticules de silice obtenu à l'étape a1) à la température de durcissement de la matrice polymère.

**Patentansprüche**

1. Verfahren zur In-situ-Synthese von Siliziumdioxid-Nanopartikeln in einer wärmehärtbaren Polymermatrix, **dadurch gekennzeichnet, dass** es die folgenden Schritte umfasst:

a) Bilden einer inversen Emulsion wässrige Phase organische Phase, in der die wässrige Phase mindestens einen basischen Katalysator umfasst und die organische Phase mindestens einen nicht vernetzten (Co)Polymer-Vorläufer umfasst, ausgewählt aus einem aliphatischen, cycloaliphatischen oder aromatischen Epoxidharz-Vorläufer, einem Polyesterimid-Vorläufer, einem ungesättigten/Epoxid-Polyester-(Co)Polymer-Vorläufer, einem Polyether-/Epoxid-(Co)Polymer-Vorläufer und einem Polyurethan-Vorläufer;

b) Einführen, in die in Schritt a) gebildete inverse Emulsion, von mindestens einem, ein vollständiges Netz bildendem Siliziumdioxid-Vorläufer, dessen Hydrolysegeschwindigkeit höher ist als die Vernetzungsgeschwindigkeit des (Co)Polymers, wobei dieser Siliziumdioxid-Vorläufer ausgewählt ist aus Tetraethoxysilan (TEOS), Tetramethoxysilan (TMOS), Tetrakis(2,2,2-trifluoroethoxy)silan und Tetrakis(1,1,1,3,3,3-hexafluoropropoxy)silan, und

c) Rühren des in Schritt b) erhaltenen Gemisches und Erwärmen auf eine Temperatur von zwischen 20 °C und 70 °C, und

dadurch, dass kein Schritt des Funktionalisierens des Polymervorläufers umgesetzt und kein Lösungsmittel oder Kopplungsmittel hinzugefügt wird.

**2.** Verfahren nach Anspruch 1, wobei der basische Katalysator ausgewählt ist aus Ammoniak oder Harnstoff.

**3.** Verfahren nach Anspruch 1 oder 2, **dadurch gekennzeichnet, dass** der Vorläufer ein Polyether-/Epoxid-(Co)Polymer-Vorläufer oder ein Polyesterimid-Polymer-Vorläufer ist und dadurch, dass die Schritte a) und b) in einem doppelwandigen, auf 20 °C Temperatur geregelten Reaktor umgesetzt werden und Schritt c) bei 70 °C ausgeführt wird.

**4.** Verfahren nach einem der vorstehenden Ansprüche, wobei das Verhältnis Siliziumdioxid-Vorläufermasse/(Co)Polymer-Vorläufermasse zwischen 1/100 und 35/100, bevorzugt 9/100 beträgt.

**5.** Verfahren nach einem der vorstehenden Ansprüche, **dadurch gekennzeichnet, dass** der nicht vernetzte (Co)Polymer-Vorläufer in Schritt a) keinen Härter enthält und dadurch, dass es einen Schritt des Hinzufügens des Härters in das nach Schritt c) erhaltene Gemisch umfasst.

**6.** Verfahren nach Anspruch 5, wobei der Härter ein Härter auf Basis von Säureanhydrid, wie methylhexahydrophthalischem Anhydrid (MHHPA), methyltetrahydrophthalischem Anhydrid (MTHPA), phthalischem Anhydrid (PA), tetrahydrophthalischem Anhydrid (THPA), und hexahydrophthalischem Anhydrid (HHPA) ist.

**7.** Verfahren zur Synthese einer wärmegehärteten, mit Siliziumdioxid-Nanopartikeln dotierten Polymermatrix, das die folgenden Schritte umfasst:

a1) Umsetzen des Verfahrens nach einem der Ansprüche 1 bis 5,
bl) Erwärmen der in Schritt a1) erhaltenen wärmehärtbaren, mit Siliziumdioxid-Nanopartikeln dotierten Matrix auf die Härtungstemperatur der Polymermatrix.

## Claims

**1.** Method for *in-situ* synthesis of silica nanoparticles in a thermosetting matrix, **characterised in that** it comprises the following steps:

a) forming an aqueous-phase/organic-phase inverse emulsion, wherein the aqueous phase comprises at least one basic catalyst and the organic phase comprises at least one non-crosslinked (co)polymer precursor chosen from an aliphatic, cycloaliphatic or aromatic epoxy resin precursor, a polyester-imide precursor, an unsaturated/epoxy polyester (co)polymer precursor, a polyether/epoxy (co)polymer precursor and a polyurethane precursor;
b) introducing, into the inverse emulsion formed in step a), at least one silica precursor forming a complete network of which the speed of hydrolysis is greater than the cross-linking speed of the (co)polymer, with this silica precursor chosen from Tetraethoxysilane (TEOS), Tetramethoxysilane (TMOS), tetrakis(2,2,2-trifluoroethoxy)silane and tetrakis (1,1,1,3,3,3 -hexafluoropropoxy)silane, and
c) stirring the mixture obtained in step b) and heating to a temperature between 20°C and 70°C, and

**in that** no step of functionalisation of the polymer precursor is implemented and no solvent or crosslinking agent is added.

**2.** Method according to claim 1, wherein the basic catalyst is chosen from ammonia or urea.

**3.** Method according to claim 1 or 2, **characterised in that** the precursor is a polyether/epoxy (co)polymer precursor or a polyesterimide polymer precursor and **in that** steps a) and b) are implemented in a double-walled reactor set to a temperature of 20°C and step c) is carried out at 70°C.

**4.** Method as claimed in anyone of the preceding claim, wherein the silica precursor mass/(co)polymer precursor mass ratio is between 1/100 and 35/100, and preferably is 9/100.

**5.** Method as claimed in anyone of the preceding claim, **characterised in that** in step a) the non-crosslinked (co)polymer precursor does not contain a hardener and **in that** it comprises a step of adding of a hardener into the mixture obtained after step c).

6. Method according to claim 5, wherein the hardener is a hardener based on an acid anhydride such as methylhexahydrophthalic anhydride (MHHPA), methyltetrahydrophthalic anhydride (MTHPA), phtalic anhydride (PA), tetrahydrophthalic anhydride (THPA), and hexahydrophthalic anhydride (HHPA).

7. Method for synthesis of thermohardener polymer matrix doped with silica nanoparticles comprising the following steps;

   a1) implementation of the method according to anyone of claims 1 to 5,
   b1) heating of the thermosetting matrix doped with silica nanoparticle obtained in step a1) to the hardening temperature of the polymer matrix.

**Figure 1**

**Figure 2**

Figure 3

Figure 4

Figure 5

**Figure 6**

Figure 7

TG /%                                                                                                          Temp. /°C

Damisol-échantillons à base de :
8.6 phr de SiO2
8.6 phr odeSiO2
*(Protocole III)*

EPE- échantillons à base de :
6.2 phr de SiO2 *(Protocole I)*
8.7 phr de SiO2
11.1 phr de SiO2

Temps/min

**Figure 8**

Figure 9

Figure 10

EP 2 817 361 B1

## RÉFÉRENCES CITÉES DANS LA DESCRIPTION

**Documents brevets cités dans la description**

- US 2005245665 A1

**Littérature non-brevet citée dans la description**

- **MASCIA et al.** Sélective Repartition of In-Situ Generated Silicia Produced During the Evolution of an Epoxide Network from a Homogeneous Precursors Mixture and Effects on Properties. *Journal of Applied Polymer Science,* 2004, vol. 94, 1279-1290
- **LEE et al.** Nanoqueous Synthesis of Nanosilica in Epoxy Resin Matrix and Thermal Properties of Their Cured Nancomposites. *Journal of Polymer Science : Part A : Polymer Chemistry,* 2006, vol. 44, 755-768

- Solvent-free one-pot synthesis of high performance silica/epoxy nanocomposites. **PHONTHAMACHAI et al.** Polymer. Elsevier Science Publishers B.V, 29 Octobre 2010, vol. 51, 5377-5384
- *Polymer International,* 1998, vol. 46, 81-92
- *Thèse C.D Pham,* 2009